(19) Europäisches Patentamt
European Patent Office
Office européen des brevets

(11) **EP 4 382 287 B1**

(12) **EUROPEAN PATENT SPECIFICATION**

(45) Date of publication and mention
of the grant of the patent:
**04.02.2026 Bulletin 2026/06**

(21) Application number: **23209742.8**

(22) Date of filing: **14.11.2023**

(51) International Patent Classification (IPC):
*B29C 73/16* (2006.01)   *B29D 30/06* (2006.01)
*B60C 19/12* (2006.01)

(52) Cooperative Patent Classification (CPC):
**B29C 73/163; B29D 30/0685; B60C 19/122**

(54) **SEALANT COMPOSITION AND PNEUMATIC TIRE**

DICHTUNGSZUSAMMENSETZUNG UND LUFTREIFEN

COMPOSITION D'ÉTANCHÉITÉ ET PNEUMATIQUE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **08.12.2022 JP 2022196399**

(43) Date of publication of application:
**12.06.2024 Bulletin 2024/24**

(73) Proprietor: **Toyo Tire Corporation
Itami-shi, Hyogo 664-0847 (JP)**

(72) Inventor: **KIMURA, Takuya
Itami-shi, Hyogo 664-0847 (JP)**

(74) Representative: **Ricker, Mathias
Wallinger Ricker Schlotter Tostmann
Patent- und Rechtsanwälte Partnerschaft mbB
Zweibrückenstraße 5-7
80331 München (DE)**

(56) References cited:
**US-A1- 2016 032 215     US-A1- 2019 009 480
US-A1- 2019 092 103**

**Description**

BACKGROUND OF THE INVENTION

1. Field of the Invention

The present invention relates to a sealant composition and also to a pneumatic tire using the same.

2. Description of Related Art

As a pneumatic tire with an anti-puncture function, a tire having a sealant layer placed on its inner surface is known. In a tire provided with a sealant layer, when a foreign object, such as a nail, penetrates the tread, and a through hole is formed, the sealant layer automatically closes the through hole to prevent air leakage from the tire. A sealant layer is formed, for example, using an application apparatus as described in JP2022-076890A, by ejecting a sealant composition from its nozzle and applying the same to the tire inner surface.

As such a sealant composition, for example, JP2011-529972A describes one containing an unsaturated diene elastomer, 30 phr to 90 phr of a hydrocarbon resin, 0 phr to 60 phr of a liquid plasticizer having a Tg below -20°C, and 0 to less than 30 phr of a filler.

The US 2019/009480 A1 discloses an apparatus and a method for producing a semifinished product comprising a strip of sealing compound for building tyres, comprising at least one unsaturated styrene thermoplastic elastomer, one bonding resin and one cross-linking agent.

The US 2019/092103 A1 discloses soundproof self-sealing tyres for vehicles wheels and to processes for the manufacture thereof. The soundproof self-sealing tyres of the invention comprise closed-cell foamed polyolefin materials with closed macrocells. These noise-reducing materials allow maintaining the sealing performance of self-sealing systems.

SUMMARY OF THE INVENTION

However, the sealant composition described in JP2011-529972A is highly viscous at the temperature of application and puts a load on the application apparatus, resulting in the need to lower the application speed. Thus, there is room for improvement in production efficiency (i.e., processability in the application step).

The production efficiency may be improved by incorporating a large amount of plasticizer to reduce the viscosity of the sealant composition. Such a low-viscosity-type sealant composition has an advantage in production efficiency. However, after the sealant composition is applied, when the tire is allowed to stand at room temperature or rotates at a high speed, the sealant layer is likely to undergo flow deformation, resulting in poor shape retention. Meanwhile, a high-viscosity-type sealant composition with a reduced amount of plasticizer has an advantage in sealant layer shape retention, but there is a problem with production efficiency. Therefore, it has been demanded to improve the production efficiency during application while ensuring sealant layer shape retention.

In view of the above points, an object of an embodiment of the invention is to provide a sealant composition that allows for improved production efficiency during application while ensuring sealant layer shape retention.

The invention encompasses the following embodiments.

[1] A sealant composition including, per 100 parts by mass of a solid rubber component containing 90 parts by mass or more of a diene rubber, 95 to 150 parts by mass of a hydrocarbon resin, 20 to 100 parts by mass of a liquid plasticizer, and 0.05 to 4.5 parts by mass of an organic peroxide crosslinking agent.

[2] The sealant composition according to [1], in which the organic peroxide crosslinking agent has a 10-hour half-life temperature of 80 to 150 °C.

[3] The sealant composition according to [1], in which the organic peroxide crosslinking agent is at least one member selected from the group consisting of dicumyl peroxide, t-butylcumyl peroxide, 2,5-dimethyl-2,5-di(t-butylperoxy) hexane, 2,5-dimethyl-2,5-di(t-butylperoxy)hexyne-3, bis[(t-butylperoxy)isopropyl]benzene, di-t-hexyl peroxide, di-t-butyl peroxide, 1,1-di(t-butylperoxy)cyclohexane, 1,1-di(t-hexylperoxy)cyclohexane, n-butyl-4,4-di(t-butylperoxy) valerate, 2,2-bis[4,4-di(t-butylperoxy)cyclohexyl]propane, 2,2-di(t-butylperoxy)butane, 2,5-dimethyl-2,5-di(benzoylperoxy)hexane, t-butyl peroxybenzoate, t-hexyl peroxybenzoate, t-hexyl peroxyisopropyl monocarbonate, t-butyl peroxy-3,5,5-trimethyl hexanoate, t-butyl peroxylaurate, t-butyl peroxyisopropyl monocarbonate, t-butyl peroxy-2-ethylhexyl monocarbonate, and t-butyl peroxyacetate.

[4] The sealant composition according to any one of [1] to [3], in which the diene rubber is at least one member selected from the group consisting of natural rubber, synthetic polyisoprene, polybutadiene, an isoprene copolymer, and a butadiene copolymer.

[5] The sealant composition according to any one of [1] to [4], in which the liquid plasticizer is an oil and/or a liquid rubber.

[6] A pneumatic tire including a sealant layer formed from the sealant composition according to any one of [1] to [5].

According to embodiments of the invention, it is possible to improve the production efficiency during application while ensuring sealant layer shape retention.

BRIEF DESCRIPTION OF THE DRAWINGS

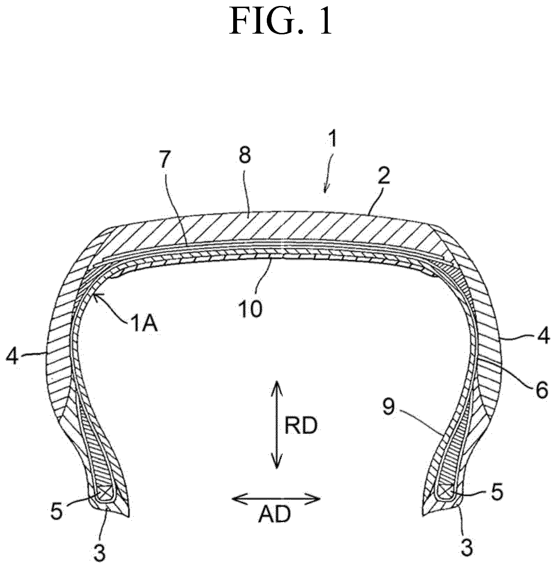

FIG. 1 is a cross-sectional view of a pneumatic tire according to one embodiment.

DESCRIPTION OF EMBODIMENTS

A sealant composition according to this embodiment is a rubber composition that includes a solid rubber component containing a diene rubber, a hydrocarbon resin, a liquid plasticizer, and an organic peroxide crosslinking agent.

In this embodiment, the solid rubber component contains a diene rubber. The solid rubber component contains a diene rubber as a main component. Thus, the diene rubber proportion in 100 mass% of the solid rubber component is 90 mass% or more, and may also be 100 mass%. As used herein, "solid" refers to not having fluidity at 23 °C.

A diene rubber refers to a rubber with a repeating unit corresponding to a diene monomer having a conjugated double bond. As diene rubbers for the solid rubber component, for example, natural rubber (NR), synthetic polyisoprene (isoprene rubber; IR), polybutadiene (butadiene rubber; BR), isoprene copolymers, butadiene copolymers, and the like can be mentioned. One of them may be used alone, and it is also possible to use two or more kinds together.

Here, an isoprene copolymer is a copolymer rubber of isoprene and other monomers, and, for example, styrene-isoprene copolymer rubber, butadiene-isoprene copolymer rubber, styrene-butadiene-isoprene copolymer rubber, and the like can be mentioned. A butadiene copolymer is a copolymer of butadiene and other monomers, and, for example, styrene-butadiene rubber (SBR), butadiene-isoprene copolymer rubber, styrene-butadiene-isoprene copolymer rubber, and the like can be mentioned. Incidentally, a copolymer rubber containing both isoprene and butadiene as monomers is included in the category of copolymers of the monomer whose molar proportion is higher. That is, when the molar proportion of isoprene is higher, such a copolymer is included in isoprene copolymers, while when the molar proportion of butadiene is higher, such a copolymer is included in butadiene copolymers.

The concept of the diene rubbers also encompasses those modified at the terminal or backbone as necessary and those modified to impart desired properties (e.g., modified NR).

In one embodiment, the solid rubber component may contain 20 to 80 mass% of natural rubber and/or polyisoprene and 20 to 80 mass% of polybutadiene; 30 to 70 mass% of natural rubber and/or polyisoprene and 30 to 70 mass% of polybutadiene; or 40 to 60 mass% of natural rubber and/or polyisoprene and 40 to 60 mass% of polybutadiene.

The solid rubber component may contain a solid rubber other than diene rubbers. As such non-diene rubbers, butyl rubber and the like can be mentioned, for example.

A hydrocarbon resin is a polymer based essentially on carbon and hydrogen. As a hydrocarbon resin, a solid thermoplastic resin having no fluidity at 23°C is preferably used. The hydrocarbon resin may be aliphatic, alicyclic, or aromatic, or may also be a combination of them, for example, an aliphatic/aromatic resin. The hydrocarbon resin may be a petroleum resin, or may also be a non-petroleum natural resin or synthetic resin.

As preferred examples of hydrocarbon resins, petroleum resins, styrene-based resins, and terpene-based resins can be mentioned. One of them may be used alone, and it is also possible to use two or more kinds together.

A petroleum resin is a resin obtained by polymerizing a petroleum fraction, and, for example, C5-based aliphatic petroleum resins, C9-based aromatic petroleum resins, and C5/C9-based aliphatic/aromatic copolymerized petroleum resins can be mentioned. One of them may be used alone, and it is also possible to use two or more kinds together. An aliphatic petroleum resin is a resin obtained by polymerizing a petroleum fraction equivalent to 4 to 5 carbon atoms (C5 fraction), and may be hydrogenated. An aromatic petroleum resin is a resin obtained by polymerizing a petroleum fraction equivalent to 8 to 10 carbon atoms (C9 fraction), and may be hydrogenated. An aliphatic/aromatic copolymerized petroleum resin is a resin obtained by copolymerizing a C5 fraction and a C9 fraction, and may be hydrogenated.

A styrene-based resin (styrene-based hydrocarbon resin) is a resin obtained by polymerizing a styrene-based monomer, such as styrene or its derivative (e.g., $\alpha$-methylstyrene, vinyltoluene, 4-tert-butylstyrene, etc.), and may be a copolymer of a styrene-based monomer and other aromatic or aliphatic monomers. As styrene-based resins, for example, styrene/$\alpha$-methylstyrene copolymers, $\alpha$-methylstyrene homopolymers, styrene-based monomer/aliphatic monomer copolymers, $\alpha$-methylstyrene/aliphatic monomer copolymers, styrene/$\alpha$-methylstyrene/aliphatic monomer copolymers, and the like can be mentioned. One of them may be used alone, and it is also possible to use two or more kinds together.

A terpene-based resin (terpene-based hydrocarbon resin) is a resin obtained by polymerizing a terpene compound and has a unit derived from a terpene compound. As terpene compounds, for example, $\alpha$-pinene, $\beta$-pinene, limonene, dipentene, and the like can be mentioned. Examples of terpene-based resins include a polyterpene resin obtained by polymerizing a terpene compound alone, as well as modified terpene resins obtained by polymerizing a terpene compound and a monomer other than terpene. One of them may be used alone, and it is also possible to use two or more kinds together. As a modified terpene resin, for example, an aromatic modified terpene resin obtained by polymerizing a terpene compound and an aromatic compound (e.g., terpene-phenol resin) can be mentioned.

The softening point of the hydrocarbon resin is not particularly limited, but is preferably 80 to 150 °C, and more preferably 80 to 120°C. As used herein, the softening point is a value measured in accordance with ASTM D6090, and, in Examples, values measured using "DP70" (automated softening point measuring apparatuses) manufactured by METTLER TOLEDO were employed.

The hydrocarbon resin content is, per 100 parts by mass of the solid rubber component, 95 to 150 parts by mass, preferably 95 to 130 parts by mass, and more preferably 95 to 115 parts by mass. When the hydrocarbon resin content is 95 parts by mass or more, it becomes easier to reduce the viscosity during application and improve the application speed. When the hydrocarbon resin content is 150 parts by mass or less, cracks are less likely to occur in the sealant layer.

A liquid plasticizer refers to a plasticizer that is liquid at 23 °C. That is, "liquid" means having fluidity at 23 °C. As the liquid plasticizer, it is preferable to use an oil or a liquid rubber, and it is also possible to use an oil and a liquid rubber together.

As the oil, any of various oils that are generally incorporated into rubber compositions can be used, and, for example, mineral oils, vegetable oils, polyolefin oils, and the like can be mentioned. A specific example of a preferred oil is a mineral oil containing a hydrocarbon as a main component, and it is preferable to use at least one mineral oil selected from the group consisting of paraffinic oils, naphthenic oils, and aromatic oils, for example.

A liquid rubber is a rubber that is liquid at 23°C. As liquid rubbers, for example, liquid isoprene rubber, liquid butadiene rubber, liquid styrene butadiene rubber, liquid isoprene butadiene rubber, liquid isoprene styrene rubber, liquid isoprene butadiene styrene rubber, liquid isobutylene, liquid ethylene propylene diene rubber (EPDM), and the like can be mentioned. These liquid rubbers may be modified by carboxylation or methacrylation. One of these liquid rubbers may be used alone, and it is also possible to use two or more kinds together. As the liquid rubber, a liquid diene rubber is preferably used.

The weight average molecular weight (Mw) of the liquid rubber is not particularly limited, but is generally less than 100,000, and may be 1,000 to 80,000, or 2,000 to 60,000. Incidentally, a diene rubber in the solid rubber component generally has a weight average molecular weight (Mw) of 200,000 or more, and is distinguished from liquid rubbers.

As used herein, the weight average molecular weight (Mw) is a value measured by gel permeation chromatography (GPC). Specifically, for example, a differential refractive index detector (RI)-equipped "HLC8320-GPC" manufactured by Tosoh Corporation is used as the measuring apparatus, tetrahydrofuran (THF) is used as the solvent, and "TSKgel SuperHZM-M" manufactured by Tosoh Corporation is used as the column. Then, using a commercially available standard polystyrene, the polystyrene-equivalent weight average molecular weight is calculated at a measurement temperature of 40 °C, a flow rate of 0.35 mL/min, a concentration of 1.0 g/L, and an injection volume of 40 $\mu$L.

The liquid plasticizer content is, per 100 parts by mass of the solid rubber component, 20 to 100 parts by mass, preferably 30 to 80 parts by mass, more preferably 35 to 80 parts by mass, and still more preferably 35 to 70 parts by mass. When the liquid plasticizer content is 20 parts by mass or more, it becomes easier to reduce the viscosity during application and improve the application speed, and sealing properties in the sealant layer can also be improved. Here, sealing properties refers to the ability to automatically close a through hole to prevent air leakage from the tire. When the liquid plasticizer content is 100 parts by mass or less, it becomes easier to ensure sealant layer shape retention.

An organic peroxide crosslinking agent is a crosslinking agent composed of an organic compound having one or more oxygen-oxygen bonds (-O-O-) in its molecule. As organic peroxide crosslinking agents, for example, dialkyl peroxides, peroxyketals, peroxy esters, diacyl peroxides, and the like can be mentioned. One of them may be used alone, and it is also possible to use two or more kinds together.

As dialkyl peroxides, for example, dicumyl peroxide, t-butylcumyl peroxide, 2,5-dimethyl-2,5-di(t-butylperoxy) hexane, 2,5-dimethyl-2,5-di(t-butylperoxy)hexyne-3, bis[(t-butylperoxy)isopropyl]benzene, di-t-hexyl peroxide, di-t-butyl peroxide, and the like can be mentioned. One of them may be used alone, and it is also possible to use two or more kinds together.

As peroxyketals, for example, 1,1-di(t-butylperoxy)cyclohexane, 1,1-di(t-hexylperoxy)cyclohexane, n-butyl-4,4-di(t-butylperoxy)valerate, 2,2-bis[4,4-di(t-butylperoxy)cyclohexyl]propane, 2,2-di(t-butylperoxy)butane, and the like can be mentioned. One of them may be used alone, and it is also possible to use two or more kinds together.

As peroxy esters, for example, 2,5-dimethyl-2,5-di(benzoylperoxy)hexane, t-butyl peroxybenzoate, t-hexyl peroxybenzoate, t-hexyl peroxyisopropyl monocarbonate, t-butyl peroxy-3,5,5-trimethyl hexanoate, t-butyl peroxylaurate, t-butyl peroxyisopropyl monocarbonate, t-butyl peroxy-2-ethylhexyl monocarbonate, t-butyl peroxyacetate, and the like can be mentioned. One of them may be used alone, and it is also possible to use two or more kinds together.

As diacyl peroxides, for example, dibenzoyl peroxide, di(methylbenzoyl) peroxide, benzoyl methylbenzoyl peroxide, and the like can be mentioned. One of them may be used alone, and it is also possible to use two or more kinds together.

As the organic peroxide crosslinking agent, it is preferable to use one having a 10-hour half-life temperature of 80 to 150 °C. The 10-hour half-life temperature is more preferably 85 to 130 °C, more preferably 85 to 125 °C, and still more preferably 90 to 120 °C.

As used herein, the 10-hour half-life temperature of an organic peroxide crosslinking agent (decomposition temperature to obtain a half-life of 10 hours) is the value described in NOF Corporation's catalog "Organic Peroxides, 10th Ed." (produced in February 2015). When not described, a value determined by the following method similar to the method described in the catalog is employed. That is, using a solvent that is relatively inert to radicals (usually benzene, sometimes toluene, cumene, or ethyl acetate, etc.), an organic peroxide solution having a concentration of 0.1 mol/L (sometimes 0.05 mol/L) is prepared. The solution is thermally decomposed at a constant temperature in a nitrogen atmosphere, and the amount of active oxygen is measured by iodometric titration to determine the decomposed amount of the organic peroxide. When the decomposition rate constant is "k", the time is "t", the initial concentration of the organic peroxide is "a", and the decomposed amount is "x", the relationship is:

$$\ln a/(a - x) = kt.$$

Thus, from the slope of the straight line obtained by plotting the relationship between time (t) and ln a/(a - x), k can be determined. The half-life ($t_{1/2}$) can be determined by substituting the value of k into:

$$\text{formula: } kt_{1/2} = \ln 2.$$

The above thermal decomposition is performed at several temperatures (absolute temperatures T), and the half-lives $t_{1/2}$ are determined. Then, the relationship between $\ln t_{1/2}$ and T is plotted, and, from the resulting straight line, the decomposition temperature to obtain a 10-hour half-life can be determined.

As the organic peroxide crosslinking agent, one having a molecular weight of 100 to 500 is preferably used. The molecular weight of the organic peroxide crosslinking agent is more preferably from 150 to 450, still more preferably from 180 to 400, and yet more preferably from 200 to 280.

The organic peroxide content is, per 100 parts by mass of the solid rubber component, 0.05 to 4.5 parts by mass, preferably 0.08 to 4.0 parts by mass, more preferably 0.1 to 2.5 parts by mass, and still more preferably 0.3 to 2.0 parts by mass. When the organic peroxide crosslinking agent content is 0.05 parts by mass or more, it is possible to improve the production efficiency during application while ensuring sealant layer shape retention. When the organic peroxide crosslinking agent content is 4.5 parts by mass or less, it is easier to ensure fluidity during application.

In addition to the above components, the sealant composition according to this embodiment may suitably incorporate various additives such as fillers, zinc oxide, stearic acid, processing aids, softeners, waxes, and anti-aging agents within the usual ranges.

As the fillers, carbon black and/or silica can be mentioned. Carbon black is not particularly limited, and known various species can be used. Specifically, SAF grade (N100 series), ISAF grade (N200 series), HAF grade (N300 series), FEF grade (N500 series), and GPF grade (N600 series) (all ASTM grades) can be mentioned. As carbon black, one having a nitrogen adsorption specific surface area ($N_2SA$) of 100 to 150 $m^2/g$ is preferably used. Here, the nitrogen adsorption specific surface area is measured in accordance with JIS K6217-2 (Method A):2017.

As silica, for example, wet silica and dry silica can be mentioned, and it is preferable to use wet silica such as wet-precipitated silica or wet-gelled silica.

The filler content is not particularly limited and may be, per 100 parts by mass of the solid rubber component, for example, 0 to 60 parts by mass, 10 to 50 parts by mass, or 15 to 40 parts by mass.

The zinc oxide content is not particularly limited and may be, per 100 parts by mass of the solid rubber component, for example, 0 to 10 parts by mass, 0.5 to 5 parts by mass, or 1 to 4 parts by mass.

The stearic acid content is not particularly limited and may be, per 100 parts by mass of the solid rubber component, for example, 0 to 10 parts by mass, 0.5 to 5 parts by mass, or 1 to 4 parts by mass.

The sealant composition according to this embodiment may incorporate a vulcanizing agent and a vulcanization accelerator, but is preferably free of vulcanizing agents and vulcanization accelerators. Here, as a vulcanizing agent, sulfur can be mentioned. As vulcanization accelerators, various vulcanization accelerators such as sulfenamide-based, guanidine-based, thiuram-based, and thiazole-based vulcanization accelerators can be mentioned.

The sealant composition according to this embodiment can be produced by kneading in the usual manner using a kneading machine commonly used in the rubber industry. For example, in the first step, ingredients excluding a hydrocarbon resin and an organic peroxide crosslinking agent are added to a solid rubber component and kneaded. Next, in the second step, a hydrocarbon resin and an organic peroxide crosslinking agent are added and kneaded. As a result, a sealant composition is obtained.

In the first step, for example, a kneading machine such as a Banbury mixer, a roll mill, or a kneading extruder is used. In the first step, a liquid plasticizer is put into the kneading machine together with a solid rubber component, optionally followed by the addition of ingredients excluding a hydrocarbon resin and an organic peroxide crosslinking agent, and kneading is performed while increasing the temperature of the kneaded product. The discharge temperature of the kneaded product from the kneading machine in the first step is not particularly limited and may be, for example, 120 to 160 °C.

In the second step, for example, a kneading extruder such as a twin-screw kneading extruder or a co-kneader is used. In the second step, a hydrocarbon resin and an organic peroxide crosslinking agent are put into the kneading extruder together with the kneaded product obtained in the first step, and kneaded. The discharge temperature of the kneaded product from the kneading machine in the second step is not particularly limited, but is preferably a temperature higher than the softening point of the hydrocarbon resin. As a result, the dispersibility of the hydrocarbon resin can be improved. In addition, in order for the crosslinking reaction of the organic peroxide crosslinking agent to proceed, the discharge temperature in the second step is preferably 100 to 180 °C, and more preferably 120 to 160 °C. The kneading time in the second step is preferably 0.5 to 6 minutes, and more preferably 1 to 5 minutes.

The sealant composition according to this embodiment can be used to form a sealant layer on the inner surface of a pneumatic tire. As pneumatic tires, pneumatic tires of various sizes for various uses, such as tires for passenger cars and heavy-duty tires for trucks, buses, and the like, can be mentioned.

One embodiment of a pneumatic tire having a sealant layer will be described using FIG. 1. The pneumatic tire 1 includes an annular tread 2 that is in contact with the road surface, a pair of left and right bead parts 3,3 located on the inner side in the tire radial direction RD of the tread 2, and a pair of left and right side walls 4,4 located between the tread 2 and the bead parts 3,3. The tire 1 includes a bead core 5 embedded in each bead part 3, a carcass ply 6 toroidally extending between the left and right bead parts 3,3, a belt 7 and a tread rubber 8 provided on the outer circumferential side of the carcass ply 6 in the tread 2, an inner liner 9 provided on the tire inner surface side of the carcass ply 6, and a sealant layer 10 provided on the tire inner surface side of the inner liner 9.

The sealant layer 10 is provided on the inner surface 1A of the pneumatic tire 1, specifically over the inner side of the inner liner 9. In this example, the sealant layer 10 is provided on the tire inner surface 1A in the tread 2 from one end to the other end in the tire axial direction AD. Like this, the sealant layer 10 is preferably provided over the entire inner surface of the tread 2. The sealant layer 10 may be provided only on the inner surface of the tread 2, and may also be provided in a wider area including the inner surface of the tread 2. That is, it is preferable that the sealant layer 10 is provided on the inner surface 1A of the tire 1, including the inner surface of the tread 2.

The method for forming a sealant layer is not particularly limited, but it is favorable that the sealant composition is heated to a temperature higher than the softening point of the hydrocarbon resin (e.g., 80 to 160 °C), and applied to the inner surface of a pneumatic tire using an application apparatus. Specifically, for example, it is possible that the sealant composition is ejected in the form of a band from the nozzle of the application apparatus, and applied along the tire circumferential direction while displacing the band relative to the tire inner surface in the tire axial direction. The sealant composition after application is left at room temperature, and, as a result, due to a decrease in its fluidity, the sealant composition settles on the inner surface of the pneumatic tire, forming a sealant layer.

The thickness of the sealant layer is not particularly limited and may be, for example, 3 to 7 mm.

EXAMPLES

Examples will be shown hereinafter, but the invention is not limited to these examples.

Components used in the examples and comparative examples are as follows.

- IR: "IR2200" manufactured by JSR Corporation
- BR: "UBEPOL BR150B" manufactured by UBE Corporation
- Carbon black: N234, "SEAST 7HM" manufactured by Tokai Carbon Co., Ltd., $N_2SA = 126\ m^2/g$, DBP = 120 $cm^3$/100 g
- Liquid plasticizer 1: Process oil, "Process NC140" manufactured by ENEOS Corporation
- Liquid plasticizer 2: Liquid polyisoprene rubber, "KURAPRENE LIR-50" manufactured by Kuraray Co., Ltd.
- Hydrocarbon resin: "Petrotac 90" manufactured by Tosoh Corporation, aliphatic/aromatic copolymerized petroleum resin, softening point = 95°C, weight average molecular weight (Mw) = 1,600, Mw/Mn = 1.8
- Zinc oxide: "Zinc Oxide, Type 2" manufactured by Mitsui Mining & Smelting Co., Ltd.
- Stearic acid: "LUNAC S-20" manufactured by Kao Corporation
- Sulfur: "Powder Sulfur" manufactured by Tsurumi Chemical Industry Co., Ltd.
- Vulcanization accelerator 1: "SOXINOL D-G" manufactured by Sumitomo Chemical Co., Ltd., guanidine-based vulcanization accelerator
- Vulcanization accelerator 2: "SOXINOL CZ" manufactured by Sumitomo Chemical Co., Ltd., sulfenamide-based

EP 4 382 287 B1

vulcanization accelerator

**[0058]** - Organic peroxide crosslinking agent 1: 1,1-Di(t-butylperoxy)cyclohexane, 10-hour half-life temperature: 90.7°C, "PERHEXA C-40" manufactured by NOF Corporation (active ingredient: 40 mass%)

- Organic peroxide crosslinking agent 2: Dicumyl peroxide, 10-hour half-life temperature: 116.4°C, "PERCUMYL D-40" manufactured by NOF Corporation (active ingredient: 40 mass%)
- Organic peroxide crosslinking agent 3: t-Butylcumyl peroxide, 10-hour half-life temperature: 119.5°C, "PERBUTYL C" manufactured by NOF Corporation (active ingredient: 90 mass% or more)

[Examples 1 to 8, Comparative Examples 1 to 5]

Sealant compositions of Examples 1 to 8 and Comparative Examples 1 to 5 were prepared according to the formulations (parts by mass) shown in Table 1 below. Incidentally, in Table 1, the amounts of organic peroxide crosslinking agents 1 to 3 incorporated are parts by mass as active ingredients.

Specifically, first, in the first step, components excluding a hydrocarbon resin and crosslinking ingredients (i.e., organic peroxide crosslinking agent, sulfur, and vulcanization accelerator) were kneaded using a Banbury mixer (discharge temperature: 120°C). Next, in the second step, a hydrocarbon resin and crosslinking ingredients were added to the kneaded product obtained in the first step and kneaded using a twin-screw kneading extruder, thereby giving a sealant composition. In the second step, the discharge temperature from the twin-screw extruder was set at 140°C, and the kneading time was 3 minutes.

With respect to each obtained sealant composition, the application speed was evaluated as production efficiency during application. At the same time, the sealant layer shape retention and sealing properties were also evaluated. The evaluation methods are as follows. Incidentally, when the sealant composition was unable to be ejected from the nozzle of the application apparatus, making it impossible to prepare a sealant layer, such a sealant composition was not evaluated for shape retention and sealing properties, and indicated by "-" in Table 1.

(1) Application Speed: Using a material application system manufactured by Nordson, a sealant composition was charged in the application apparatus and temperature-controlled at 140°C for 40 minutes. Subsequently, the time taken to discharge 1 kg of the sealant composition at a pressure of $4.0 \times 10^5$ Pa was measured, and the amount of discharge per hour was calculated as the application speed. The result was expressed as an index taking the application speed of Comparative Example 1 as 100. The larger the index, the higher the application speed, indicating better efficiency of sealant layer production. Incidentally, when the sealant composition was unable to be ejected from the nozzle at the above pressure, "B" was given.

(2) Shape Retention: Using a material application system manufactured by Nordson, a sealant composition was applied to the inner surface of a pneumatic tire (tire size: 215/55R17) to form a 4-mm-thick sealant layer. The pneumatic tire provided with a sealant layer was laid out flat at room temperature and left for two weeks, and then the inner surface of the tire was observed to see whether the sealant layer had undergone flow deformation. When no flow deformation took place, "A" (good shape retention) was given, while when flow deformation took place, "B" (poor shape retention) was given.

(3) Sealing Properties: Using a pneumatic tire provided with a sealant layer prepared in the same manner as in the shape retention evaluation described above, the tire was mounted on a rim and filled with air at an internal pressure of 180 kPa. A nail (5.2 mm in diameter, 50 mm in length) was penetrated through the tread, and then the nail was pulled out. Based on whether air leakage occurred after pulling out the nail, sealing properties were evaluated.

7

[Table 1]

| Formulation (parts by mass) | Ex. 1 | Ex. 2 | Ex. 3 | Ex. 4 | Ex. 5 | Ex. 6 | Ex. 7 | Ex. 8 | Comp. Ex. 1 | Comp. Ex. 2 | Comp. Ex. 3 | Comp. Ex. 4 | Comp. Ex. 5 |
|---|---|---|---|---|---|---|---|---|---|---|---|---|---|
| IR | 50 | 50 | 50 | 50 | 50 | 50 | 50 | 50 | 50 | 50 | 50 | 50 | 50 |
| BR | 50 | 50 | 50 | 50 | 50 | 50 | 50 | 50 | 50 | 50 | 50 | 50 | 50 |
| Carbon black | 20 | 40 | 20 | 40 | 20 | 20 | 20 | 20 | 40 | 40 | 40 | 40 | 40 |
| Liquid plasticizer 1 | 35 | 45 | 45 | - | 20 | 50 | 35 | - | 35 | 35 | 10 | 120 | 70 |
| Liquid plasticizer 2 | - | - | 20 | 60 | 20 | 50 | - | 100 | - | - | - | - | - |
| Hydrocarbon resin | 100 | 100 | 100 | 100 | 100 | 150 | 100 | 100 | 100 | 100 | 60 | 100 | 120 |
| Zinc oxide | 3 | 3 | 3 | 3 | 3 | 3 | 3 | 3 | 3 | 3 | 3 | 3 | 3 |
| Stearic acid | 3 | 3 | 3 | 3 | 3 | 3 | 3 | 3 | 3 | 3 | 3 | 3 | 3 |
| Sulfur | - | - | - | - | - | - | - | - | - | 0.5 | - | - | - |
| Vulcanization accelerator 1 | - | - | - | - | - | - | - | - | - | 1 | - | - | - |
| Vulcanization accelerator 2 | - | - | - | - | - | - | - | - | - | 1 | - | - | - |
| Organic peroxide crosslinking agent 1 | 0.6 | 0.2 | 1.2 | - | - | - | - | 2 | - | - | 0.6 | 0.6 | 6 |
| Organic peroxide crosslinking agent 2 | - | - | - | 0.08 | 0.4 | 4 | - | - | - | - | - | - | - |
| Organic peroxide crosslinking agent 3 | - | - | - | - | - | - | 0.6 | - | - | - | - | - | - |
| Evaluation | | | | | | | | | | | | | |
| Application speed (index) | 124 | 112 | 155 | 113 | 127 | 146 | 121 | 140 | 100 | B | 30 | 240 | B |
| Shape retention | A | A | A | A | A | A | A | A | B | - | A | B | - |
| Sealing properties | No leaks | No leaks | No leaks | No leaks | No leaks | No leaks | No leaks | No leaks | No leaks | - | Leakage occurred | No leaks | - |

The results are as shown in Table 1. In Comparative Example 1, because sufficient amounts of liquid plasticizer and hydrocarbon resin were incorporated, the application speed was within an acceptable range, and sealing properties were present, but the shape retention was poor. Like this, although a low-viscosity-type sealant composition incorporating a large amount of liquid plasticizer is advantageous in production efficiency and sealing properties, the sealant layer shape retention tends to be poor.

In Comparative Example 2, for the purpose of improving the shape retention over Comparative Example 1, crosslinking with sulfur was introduced. In this case, the sealant composition lost fluidity during heating and temperature control in the application apparatus, and it was not possible to eject the sealant composition from the nozzle of the application apparatus. In the case of crosslinking with sulfur, in the second step of sealant composition preparation, heat cannot be sufficiently given during the short-time extrusion process, and the resulting sealant composition is in an uncrosslinked state. It is believed that in such an uncrosslinked sealant composition, a crosslinking reaction was accelerated during the subsequent heating and temperature control in the application apparatus, and the sealant composition lost fluidity and, as a result, was unable to be ejected from the nozzle.

In contrast, in Examples 1 to 8, because of the incorporation of an organic peroxide crosslinking agent in the solid rubber component together with predetermined amounts of hydrocarbon resin and liquid plasticizer, the application speed was high, the production efficiency was excellent, and also the shape retention and sealing properties were excellent. The reasons therefor are surmised to be as follows. That is, an organic peroxide crosslinking agent allows a crosslinking reaction to proceed during the short-time extrusion process in the second step. At this time, because shear is applied during the extrusion process, it is possible to allow the crosslinking reaction to proceed while maintaining fluidity. Therefore, the resulting sealant composition is in a crosslinked state but has fluidity. It is believed that such a crosslinked sealant composition does not harden during the subsequent heating and temperature control in the application apparatus and remains fluid to the extent that application is enabled through temperature control, and is also excellent in terms of shape retention and sealing properties in the sealing layer after application.

In Comparative Example 3, an organic peroxide crosslinking agent was incorporated, but the liquid plasticizer content and the hydrocarbon resin content were low. Accordingly, although the sealant layer shape retention was excellent, the application speed was low, indicating poor production efficiency. In addition, air leakage occurred after nail removal, indicating poor sealing properties. In Comparative Example 4, although an organic peroxide crosslinking agent was incorporated, because a large amount of liquid plasticizer was incorporated, the sealant layer underwent flow deformation when left at room temperature, indicating poor shape retention. In Comparative Example 5, because the amount of organic peroxide crosslinking agent incorporated was too large, the sealant composition lost fluidity during heating and temperature control in the application apparatus and thus was unable to be ejected from the nozzle of the application apparatus.

Incidentally, with respect to the various numerical ranges described herein, the upper and lower limits thereof can be arbitrarily combined, and all such combinations are incorporated herein as preferred numerical ranges. In addition, the description of a numerical range "X to Y" means X or more and Y or less.

Reference Signs List

    1: Pneumatic tire
    2: Tread
    3: Bead part
    4: Side wall
    5: Bead core
    6: Carcass ply
    7: Belt
    8: Tread rubber
    9: Inner liner
    10: Sealant layer

**Claims**

1.  A sealant composition comprising:

    100 parts by mass of a solid rubber component containing 90 parts by mass or more of a diene rubber;
    95 to 150 parts by mass of a hydrocarbon resin;

20 to 100 parts by mass of a liquid plasticizer; and
0.05 to 4.5 parts by mass of an organic peroxide crosslinking agent.

2. The sealant composition according to claim 1, wherein the organic peroxide crosslinking agent has a 10-hour half-life temperature of 80 to 150 °C.

3. The sealant composition according to claim 1 or 2, wherein the organic peroxide crosslinking agent is at least one member selected from the group consisting of dicumyl peroxide, t-butylcumyl peroxide, 2,5-dimethyl-2,5-di(t-butylperoxy)hexane, 2,5-dimethyl-2,5-di(t-butylperoxy)hexyne-3, bis[(t-butylperoxy)isopropyl]benzene, di-t-hexyl peroxide, di-t-butyl peroxide, 1,1-di(t-butylperoxy)cyclohexane, 1,1-di(t-hexylperoxy)cyclohexane, n-butyl-4,4-di(t-butylperoxy)valerate, 2,2-bis[4,4-di(t-butylperoxy)cyclohexyl]propane, 2,2-di(t-butylperoxy)butane, 2,5-dimethyl-2,5-di(benzoylperoxy)hexane, t-butyl peroxybenzoate, t-hexyl peroxybenzoate, t-hexyl peroxyisopropyl monocarbonate, t-butyl peroxy-3,5,5-trimethyl hexanoate, t-butyl peroxylaurate, t-butyl peroxyisopropyl monocarbonate, t-butyl peroxy-2-ethylhexyl monocarbonate, and t-butyl peroxyacetate.

4. The sealant composition according to any one of claims 1 to 3, wherein the diene rubber is at least one member selected from the group consisting of natural rubber, synthetic polyisoprene, polybutadiene, an isoprene copolymer, and a butadiene copolymer.

5. The sealant composition according to any one of claims 1 to 4, wherein the liquid plasticizer is an oil and/or a liquid rubber.

6. The sealant composition according to any one of claims 1 to 5, wherein the hydrocarbon resin has a softening point of 80 to 150 °C.

7. The sealant composition according to any one of claims 1 to 6, wherein the organic peroxide crosslinking agent has a molecular weight of 100 to 500.

8. The sealant composition according to any one of claims 1 to 7, being free of vulcanizing agents and vulcanization accelerators.

9. A pneumatic tire (1) comprising a sealant layer (10) formed from the sealant composition according to any one of claims 1 to 8.

**Patentansprüche**

1. Dichtungsmasse, welche aufweist:

100 Massenteile einer festen Kautschukkomponente, die 90 Massenteile oder mehr eines Dienkautschuks enthält,
95 bis 150 Massenteile eines Kohlenwasserstoffharzes,
20 bis 100 Massenteile eines flüssigen Weichmachers, und
0,05 bis 4,5 Massenteile eines organischen Peroxid-Vernetzungsmittels.

2. Dichtungsmasse nach Anspruch 1, wobei das organische Peroxid-Vernetzungsmittel eine 10-Stunden-Halbwertszeit-Temperatur von 80 bis 150 °C aufweist.

3. Dichtungsmasse nach Anspruch 1 oder 2, wobei das organische Peroxid-Vernetzungsmittel mindestens ein Mitglied ist, das aus der Gruppe ausgewählt worden ist, die ein Dicumylperoxid, ein t-Butylcumylperoxid, ein 2,5-Dimethyl-2,5-di(t-butylperoxy)hexan, ein 2,5-Dimethyl-2,5-di(t-butylperoxy)hexyne-3, ein Bis[(t-butylperoxy)isopropyl]benzol, ein Di-t-hexylperoxid, ein Di-t-butylperoxid, ein 1,1-Di(t-butylperoxy)cyclohexan, ein 1,1-Di(t-hexylperoxy)cyclohexan, ein n-Butyl-4,4-di(t-butylperoxy)valerat, ein 2,2-Bis[4,4-di(t-butylperoxy)cyclohexyl]propan, ein 2,2-Di(t-butylperoxy)butan, ein 2,5-Dimethyl-2,5-di(benzoylperoxy)hexan, ein t-Butylperoxybenzoat, ein t-Hexylperoxybenzoat, ein t-Hexylperoxyisopropylmonocarbonat, ein t-Butylperoxy-3,5,5-trimethylhexanoat, ein t-Butylperoxylaurat, ein t-Butylperoxyisopropylmonocarbonat, ein t-Butylperoxy-2-ethylhexylmonocarbonat und ein t-Butylperoxyacetat umfasst.

4. Dichtungsmasse nach einem der Ansprüche 1 bis 3, wobei der Dienkautschuk mindestens ein Mitglied ist, das aus der Gruppe ausgewählt worden ist, die einen Naturkautschuk, ein synthetisches Polyisopren, ein Polybutadien, ein Isopren-Copolymer und ein Butadien-Copolymer umfasst.

5. Dichtungsmasse nach einem der Ansprüche 1 bis 4, wobei der flüssige Weichmacher ein Öl und/oder ein Flüssigkautschuk ist.

6. Dichtungsmasse nach einem der Ansprüche 1 bis 5, wobei das Kohlenwasserstoffharz einen Erweichungspunkt von 80 bis 150 °C aufweist.

7. Dichtungsmasse nach einem der Ansprüche 1 bis 6, wobei das organische Peroxid-Vernetzungsmittel ein Molekulargewicht von 100 bis 500 aufweist.

8. Dichtungsmasse nach einem der Ansprüche 1 bis 7, die frei von Vulkanisationsmitteln und Vulkanisationsbeschleunigern ist.

9. Pneumatischer Reifen (1) mit einer Dichtungsschicht (10), die aus der Dichtungsmasse nach einem der Ansprüche 1 bis 8 gebildet worden ist.

**Revendications**

1. Composition d'agent d'étanchéité comprenant :

   100 parties en masse d'un composant de caoutchouc solide contenant 90 parties en masse ou plus d'un caoutchouc de type diène ;
   95 à 150 parties en masse d'une résine hydrocarbonée ;
   20 à 100 parties en masse d'un plastifiant liquide ; et
   0,05 à 4,5 parties en masse d'un agent de réticulation de type peroxyde organique.

2. Composition d'agent d'étanchéité selon la revendication 1, dans laquelle l'agent de réticulation de type peroxyde organique a une température de demi-vie en 10 heures comprise entre 80 et 150 °C.

3. Composition d'agent d'étanchéité selon la revendication 1 ou 2, dans laquelle l'agent de réticulation de type peroxyde organique est au moins un élément choisi parmi le groupe constitué de peroxyde de dicumyle, peroxyde de *t*-butyle et de cumyle, 2,5-diméthyl-2,5-di(t-butylperoxy)hexane, 2,5-diméthyl-2,5-di(*t*-butylperoxy)hexyne-3, bis[(*t*-butylperoxy)isopropyl]benzène, peroxyde de di-*t*-hexyle, peroxyde de di-*t*-butyle, 1,1-di(t-butylperoxy)cyclohexane, 1,1-di(*t*-hexylperoxy)cyclohexane, *n*-butyl-4,4-di(*t*-butylperoxy)valérate, 2,2-bis[4,4-di(*t*-butylperoxy)cyclohexyl]propane, 2,2-di(*t*-butylperoxy)butane, 2,5-diméthyl-2,5-di(benzoylperoxy)hexane, peroxybenzoate de *t*-butyle, peroxybenzoate de *t*-hexyle, *t*-hexyl peroxyisopropyl monocarbonate, *t*-butyl peroxy-3,5,5-triméthyl hexanoate, *t*-butyl peroxy laurate, *t*-butyl peroxyisopropyl monocarbonate, *t*-butyl peroxy-2-éthylhexyl monocarbonate et peroxyacétate de *t*-butyle.

4. Composition d'agent d'étanchéité selon l'une quelconque des revendications 1 à 3, dans laquelle le caoutchouc de type diène est au moins un élément choisi parmi le groupe constitué de caoutchouc naturel, de polyisoprène synthétique, de polybutadiène, d'un copolymère d'isoprène et d'un copolymère de butadiène.

5. Composition d'agent d'étanchéité selon l'une quelconque des revendications 1 à 4, dans laquelle le plastifiant liquide est une huile et/ou un caoutchouc liquide.

6. Composition d'agent d'étanchéité selon l'une quelconque des revendications 1 à 5, dans laquelle la résine hydrocarbonée a un point de ramollissement compris entre 80 et 150 °C.

7. Composition d'agent d'étanchéité selon l'une quelconque des revendications 1 à 6, dans laquelle l'agent de réticulation de type peroxyde organique a une masse moléculaire comprise entre 100 et 500.

8. Composition d'agent d'étanchéité selon l'une quelconque des revendications 1 à 7, exempte d'agents de vulcanisation et d'accélérateurs de vulcanisation.

9. Bandage pneumatique (1) comprenant une couche d'agent d'étanchéité (10) formée à partir de la composition d'agent d'étanchéité selon l'une quelconque des revendications 1 à 8.

EP 4 382 287 B1

# FIG. 1

## REFERENCES CITED IN THE DESCRIPTION

**Patent documents cited in the description**

- JP 2022076890 A
- JP 2011529972 A
- US 2019009480 A1
- US 2019092103 A1

**Non-patent literature cited in the description**

- NOF Corporation's catalog. Organic Peroxides. February 2015